# EUROPÄISCHE PATENTSCHRIFT

(11) **EP 2 593 999 B1**
(45) Veröffentlichungstag und Bekanntmachung des Hinweises auf die Patenterteilung: **01.11.2017**
(21) Anmeldenummer: 11749811.3
(22) Anmeldetag: 24.08.2011
(51) Int. Cl.: H02G 5/06, H02B 1/16

(54) **SCHIENENKASTEN UND SCHIENENVERTEILERSYSTEM MIT EINEM SCHIENENKASTEN**
BUSBAR TRUNKING UNIT AND BUSBAR TRUNKING SYSTEM COMPRISING A BUSBAR TRUNKING UNIT
COFFRET DE BARRES CONDUCTRICES ET SYSTÈME DE CANALISATIONS PRÉFABRIQUÉES COMPRENANT UN COFFRET DE BARRES CONDUCTRICES

(30) Priorität: 21.09.2010 DE 102010045949
(43) Veröffentlichungstag der Anmeldung: 22.05.2013
(73) Patentinhaber: Siemens Aktiengesellschaft, 80333 München (DE)
(72) Erfinder: BERTELS, Frank, 50765 Köln (DE); WELLNER, Olaf, 08209 Rebesgrün (DE); FRANKE, Ralf, 04416 Markkleeberg (DE)
(86) Internationale Anmeldenummer: PCT/EP2011/064568
(87) Internationale Veröffentlichungsnummer: WO 2012/038177

(56) Entgegenhaltungen:
- EP-A1- 0 933 855
- EP-A2- 0 562 434
- DE-A1-102009 032 619
- US-A- 3 571 488
- US-B1- 6 176 720

## Beschreibung

Beim Aufbau eines Schienenstranges eines Schienenverteilersystems, durch stirnseitige Aneinanderkopplung von vormontierten Schienenkästen, müssen infolge von bauseitig auftretenden Montagetoleranzen gebildete Lücken im Schienenstrang ausgeglichen werden. Bisher erfolgte der Ausgleich durch genau zu vermessende Passtücke. Hierzu wurde die Lücke vermessen, das Passstück einzeln gefertigt und anschließend montiert. Diese Vorgehensweise erforderte hohen Zeit- und Kostenaufwand.

Die Erfindung betrifft einen Schienenkasten für ein Schienenverteilersystem mit in einer Längsrichtung langgestreckten Stromschienen, die ummantelt von einem Schienengehäuse, flach nebeneinander in dem Schienengehäuse angeordneten sind, bei dem jede der Stromschienen aus zwei separaten, als starre Profile ausgebildeten Teilstücken besteht, die in der Längsrichtung in Reihe Strom leitend miteinander verbunden sind, wobei die Teilstücke in dem Schienengehäuse in der Längsrichtung unabhängig voneinander verschiebbar und quer zur Längsrichtung ortsfest gehalten sind.

Die Erfindung betrifft weiterhin ein Schienenverteilersystem mit zumindest einem derartigen Schienenkasten, als Teil eines aus stirnseitig aneinander gekoppelten Schienenkästen gebildeten Schienenstranges.

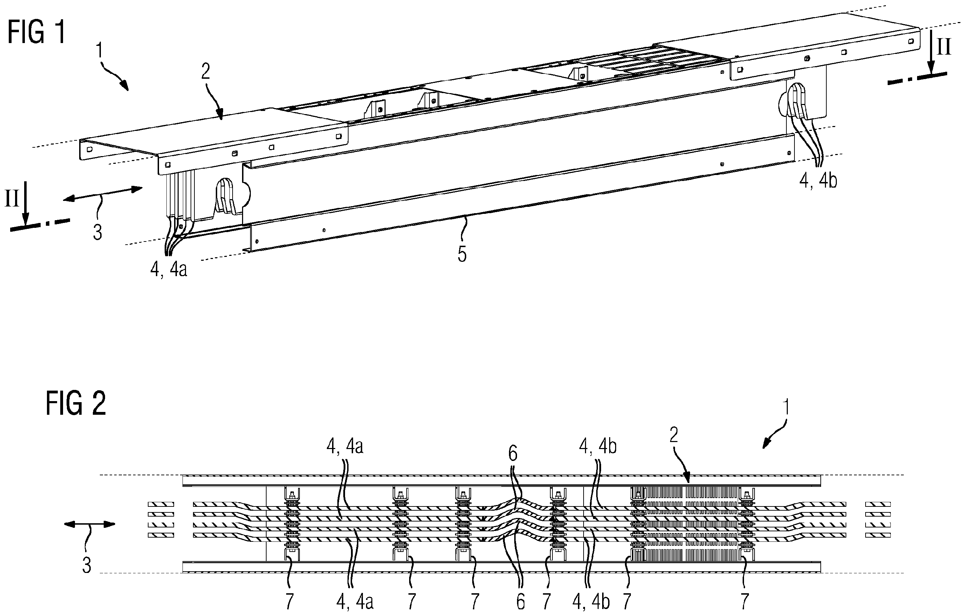

Ein gattungsgemäßer, aus der Praxis bekannter Schienenkasten ist in den Figuren 1 und 2 dargestellt. Bei diesem bekannten Schienenkasten in Form eines Dehnungskastens sind die beiden Teilstücke jeder der Stromschienen jeweils mittels eines flexiblen Strombandes Strom leitend miteinander verbunden, wobei die beiden Enden des Strombandes an die einander zugewandten Stirnseiten der beiden Teilstücke angeschweißt sind.

Aus der Druckschrift EP 0 933 855 A1 ist ein weiterer gattungsgemäßer Schienenkasten für ein Schienenverteilersystem mit in Längsrichtung sich erstrecktenden Stromschienen bekannt, die flach nebeneinander angeordnet von einem Schienengehäuse behausst sind. Jede Stromschiene besteht aus zwei separaten Teilstücken, die als starre Profile ausgebildet und in Reihe Strom leitend miteinander verbunden sind. Die Teilstücke sind in dem Schienengehäuse in Längsrichtung unabhängig voneinander verschiebbar und quer zur Längsrichtung ortsfest gehalten. Bei diesem Schienenkasten besteht das Schienengehäuse aus zwei Teilmänteln, die teleskopartig ineinander schiebbar sind. Dabei sind eine Länge der aus den Teilstücken gebildeten Stromschienen und eine Länge des aus den Teilmänteln gebildeten Schienengehäuses unabhängig voneinander frei verstellbar.

Ausgehend von einer Stromschiene mit den Merkmalen des Oberbegriffes des Patentanspruches 1 (EP 0 933 855 A1) liegt der Erfindung die Aufgabe zu Grunde, den Schienenkasten kostengünstiger zu gestalten.

Gelöst wird diese Aufgabe durch einen Schienenkasten, bei dem das Schienengehäuse aus zwei Teilmänteln besteht, die zur Längenänderung des Schienengehäuses teleskopartig ineinander schiebbar sind und bei dem die beiden Teilmäntel jeweils aus einem Strom leitenden Material bestehen und zu ihrer elektrisch leitenden Verbindung einander zugeordnete elektrische Kontaktflächen bilden, die unter Kontaktkraft elektrisch leitend unmittelbar aneinander gehalten sind, um einen als PE-Leiter verwendbaren Strompfad zu bilden.

Bevorzugt sind ein erstes der beiden Teilstücke jeder der Stromschienen in einem ersten der beiden Teilmäntel des Schienenkastens und das zweite der Teilsstücke jeder der Stromschienen in dem zweiten der beiden Teilmäntel des Schienenkastens in der Längsrichtung verschiebbar und quer zur Längsrichtung ortsfest gehalten, wobei zum Einen die beiden Teilstücke und zum Anderen die beiden Teilmäntel jeweils unverlierbar miteinander verbunden sind.

Zur gegenseitigen Fixierung der beiden Teilmäntel des Schienengehäuses sind bevorzugt erste Befestigungsmittel vorgesehen, die Langlöcher des ersten der beiden Teilmäntel und zugeordnete Befestigungsbohrungen des zweiten der beiden Teilmäntel durchgreifen.

Eine weitere bevorzugte Ausgestaltung des neuen Schienenkastens sieht vor, dass sich die Teilstücke zur Strom leitenden Verbindung an ihren einander zugewandten Stirnseiten überlappen, wobei zur gegenseitigen Fixierung der Teilstücke ein zweites Befestigungsmittel vorgesehen sein kann, das im Überlappungsbereich einander zugeordnete Langlöcher der Strom schienen durchgreift, so wie dies bereits von Stromschienen bekannt ist, die zum Antrieb von Schienenfahrzeugen dienen (US 5,224, 575 A, DE 196 09 006 C2).

Um die Montage des Schienenkastens und das Einstellen der Länge des Schienengehäuses zu erleichtern ist weiterhin mit Vorteil vorgesehen, die beiden Teilmäntel jeweils mit Handgriffen zu versehen.

Vorzugsweise ist bei einem Schienenverteilersystem mit Schienenkästen, die zur Bildung eines Schienenstranges stirnseitig aneinander gekoppelt sind, zumindest ein Schienenkasten entsprechend wie oben beschrieben ausgebildet.

Die Erfindung wird im Weiteren anhand der nachfolgenden Figuren beschrieben. Es zeigen:
- Figuren 1 und 2: ein aus der Praxis bekanntes Schienenverteilersystem mit einem Schienenkasten in Form eines Dehnungskastens,
- Figur 3: ein Schienenverteilersystem mit einem erfindungsgemäßen Schienenkasten in perspektivischer Darstellung mit Stromschiene und Schienengehäuse,
- Figuren 4 sowie 11: und 12 drei verschiedene Schnittdarstellungen des Schienenkastens gemäß der Figur 3,
- Figuren 5 bis 9: Einzelteile des Schienengehäuses,
- Figur 10: zwei Teilstücke einer der Stromschienen mit Verbindungsmittel in Explosionsdarstellung und
- Figur 13 bis 15: den Schienenkasten teilweise in Explosionsdarstellung, bei dem die Stromschienen und das Schienengehäuse jeweils für sich auf verschiedene Längen eingestellt sind.

Die Figuren 1 und 2 zeigen ein aus der Praxis bekanntes Schienenverteilersystem 1 mit einem Schienenkasten 2 in Form eines Dehnungskastens, der Teil eines Stromschienenstranges des Schienenverteilersystems ist. Der Dehnungskasten 2 weist in einer Längsrichtung 3 langgestreckte Stromschienen 4 auf, die ummantelt von einem Schienengehäuse 5, flach nebeneinander in dem Schienengehäuse 5 angeordneten sind. Bei diesem bekannten Schienenkasten besteht jede der Stromschienen 4 aus zwei separaten, als starre Profile ausgebildeten Teilstücken 4a, 4b, die in der Längsrichtung 3 in Reihe Strom leitend miteinander verbunden sind, wobei die Teilstücke 4a, 4b in dem Schienengehäuse 5 in der Längsrichtung unabhängig voneinander verschiebbar und quer zur Längsrichtung 3 ortsfest gehalten sind. Hierzu dienen Stütz- und Haltevorrichtungen 7, wie sie bereits aus der Druckschrift EP 0 530 521 B1 bekannt sind.

Die beiden Teilstücke 4a, 4b jeder der Stromschienen 4 sind jeweils mittels eines flexiblen Strombandes 6 Strom leitend miteinander verbunden, wobei die beiden Enden des Strombandes an die einander zugewandten Stirnseiten der beiden Teilstücke 4a, 4b angeschweißt sind.

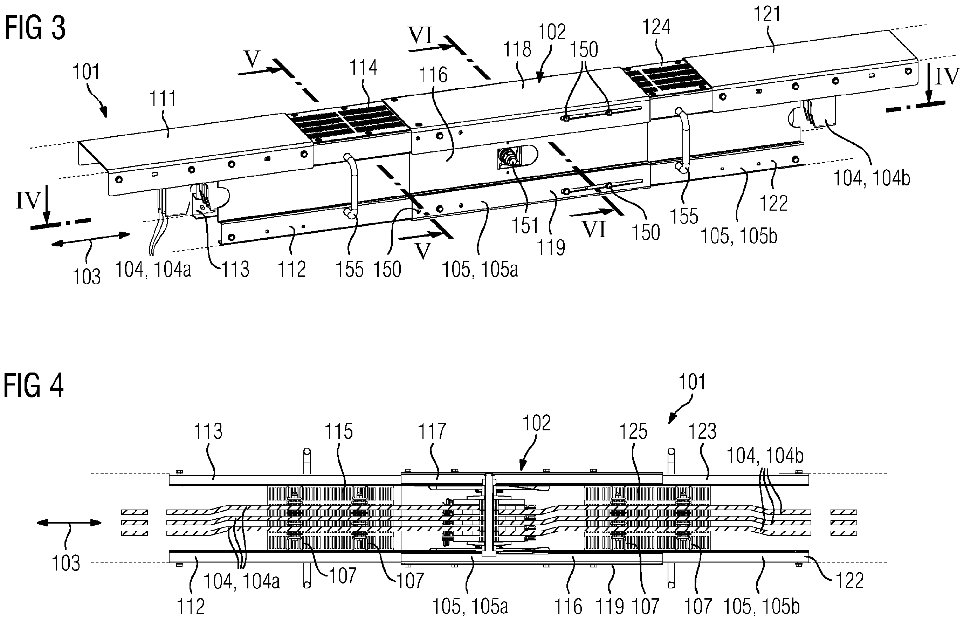

Die Figuren 3 und 4 zeigen ein erfindungsgemäßes Schienenverteilersystem 101 mit einem erfindungsgemäßen Schienenkasten 102. Auch der erfindungsgemäße Schienenkasten 102 weist in einer Längsrichtung 103 langgestreckte Stromschienen 104 auf, die ein Leiterschienenpaket bilden und die ummantelt von einem Schienengehäuse 105, flach nebeneinander in dem Schienengehäuse 105 angeordneten sind. Des Weiteren besteht auch hier jede der Stromschienen 104 aus zwei separaten, als starre Profile ausgebildeten Teilstücken 104a, 104b, die in der Längsrichtung 103 in Reihe Strom leitend miteinander verbunden sind. Auch hier sind die Teilstücke 104a, 104b in der aus der Druckschrift EP 0 530 521 B1 bekannten Weise mittels Stütz- und Haltevorrichtungen 107 in dem Schienengehäuse 105 in der Längsrichtung 103 unabhängig voneinander verschiebbar und quer zur Längsrichtung 103 ortsfest gehalten. Die beiden Teilstücke sind - wie im Weiteren noch gezeigt ist - unverlierbar aber lösbar miteinander verbunden.

Das Schienengehäuse 105 besteht aus zwei Teilmänteln 105a und 105b, die teleskopartig ineinander greifen und die zur Längenänderung des Schienengehäuses 105 stufenlos, unterschiedlich weit teleskopartig ineinander schiebbar sind.

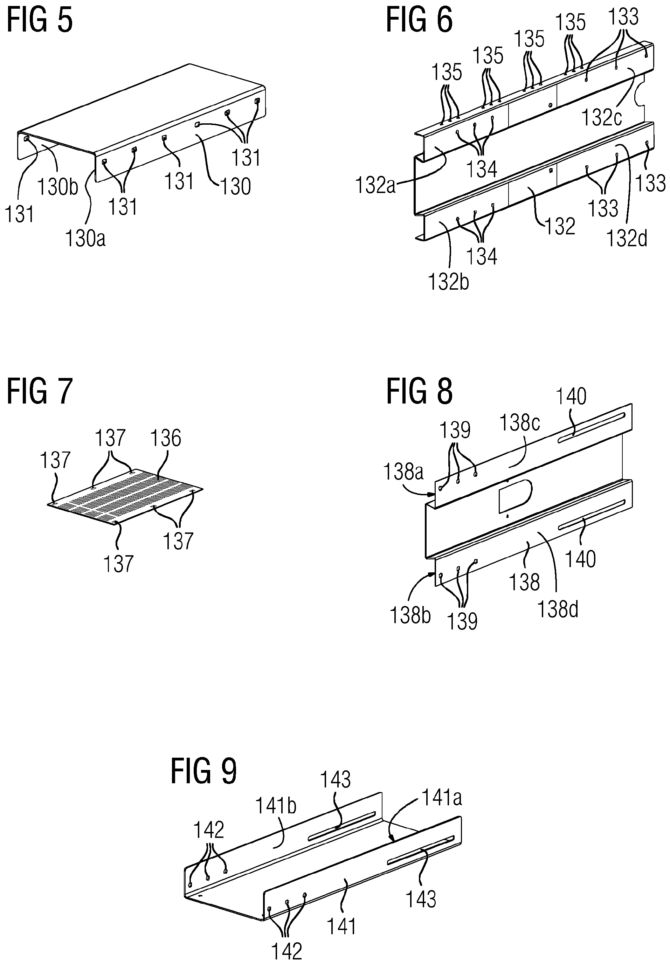

Ein erster 105a der beiden Teilmäntel ist dabei von neun Gehäuseteilen 111 bis 119 gebildet. Der zweite Teilmantel ist von fünf Gehäuseteilen 121 bis 125 gebildet. Jeweils mehrere der Gehäuseteile sind Gleichteile, die in den Figuren 5 bis 9 noch einmal einzeln dargestellt sind.

So sind die in den Figuren 3 und 4 mit 111 und 121 bezeichneten Gehäuseteile gemäß der Figur 5 als U-förmig gebogene erste Deckprofile 130 ausgebildet, die jeweils einen endseitigen Flansch bilden. Jeder dieser endseitigen Flansche dient zur Verbindung mit einem weiteren Schienenkasten des Schienenstranges und weist hierzu erste Befestigungsbohrungen 131 auf.

Die in den Figuren 3 und 4 mit 112, 113, 122 und 123 bezeichneten Gehäuseteile sind gemäß der Figur 6 W-förmig gebogene erste Seitenprofile 132. Diese weisen zweite Befestigungsbohrungen 133 zur Verbindung mit einem weiteren Schienenkasten des Schienenstranges sowie dritte 134 und vierte 135 Befestigungsbohrungen auf.

Die in den Figuren 3 und 4 mit 114, 115, 124 und 125 bezeichneten Gehäuseteile sind gemäß der Figur 7 flache Lüftungsgitter 136 mit fünften Befestigungsbohrungen 137. Dabei dienen die vierten 135 und fünften 137 Befestigungsbohrungen zur Verbindung der ersten Seitenprofile 132 mit den Lüftungsgittern 136.

Die in den Figuren 3 und 4 mit 116 und 117 sowie 118 und 119 bezeichneten Gehäuseteile bilden einen die Lüftungsgitter und die ersten Seitenprofile übergreifenden und verbindenden weiteren Flansch, der die Funktion der teleskopartigen Führung des zweiten Teilmantels 105b in dem ersten Teilmantel 105a erfüllt. Hierzu weisen die Gehäuseteile 116 und 117, die gemäß der Figur 8 W-förmig gebogene zweite Seitenprofile 138 bilden, und die Gehäuseteile 118 und 119, die gemäß der Figur 9 U-förmig gebogene zweite Deckprofile 141 bilden, jeweils an gegenüberliegenden Seiten Langlöcher 140 bzw. 143 auf, in denen gemäß der Figur 3 erste Befestigungsmittel 150 in Form von Befestigungsschrauben geführt sind. Mittels der Befestigungsschrauben sind die beiden Teilmäntel 105a, 105b unverlierbar miteinander verbunden, da diese Befestigungsmittel, die Langlöcher 140, 143 des ersten der beiden Teilmäntel 105a und die zugeordnete Befestigungsbohrungen 134 des zweiten 105b der beiden Teilmäntel durchgreifen.

Die beiden Teilmäntel 105a, 105b bestehen jeweils aus einem Strom leitenden Material - insbesondere aus verzinktem Stahl oder Aluminium - und sind elektrisch leitend derart miteinander verbunden sind, dass sie einen als PE-Leiter verwendbaren Strompfad bilden. Zur elektrisch leitenden Verbindung bilden die beiden Teilmäntel 105a, 105b dabei Kontaktpaare aus einander zugeordneten, elektrischen Kontaktflächen, die unter Kontaktkraft elektrisch leitend unmittelbar aneinander gehalten sind.

Diese Kontaktflächen sind dabei an den U-förmig gebogenen ersten Deckprofilen 130, den W-förmig gebogenen ersten Seitenprofilen 132, den W-förmig gebogenen zweiten Seitenprofilen 138 und den U-förmig gebogenen zweiten Deckprofilen 141 in der in den Figuren 5 und 6 sowie 8 und 9 gezeigten Weise ausgebildet.

So bilden gemäß der Figur 5 die nach innen weisenden, mit den Befestigungsbohrungen 131 versehenen Flächen der ersten Deckprofile 130 erste 130a und 130b der Kontaktflächen und gemäß der Figur 9 die nach innen weisenden, mit den Befestigungsbohrungen 142 und den Langlöchern 143 versehenen Flächen der zweiten Deckprofile 141 zweite 141a und 141b der Kontaktflächen. Hierzu sind die genannten Flächen, die die ersten und zweiten der Kontaktflächen bilden, metallisch blank gehalten, während die übrigen Flächen der aus Strom leitenden Material - insbesondere aus verzinktem Stahl oder Aluminium - gebildeten Deckprofile 130 und 141 zusätzlich mit einer Farbschicht versehen sind.

Weiterhin bilden gemäß der Figur 6 Abschnitte der nach außen weisenden, mit den Befestigungsbohrungen 133 und 134 versehenen Flächen der ersten Seitenprofile 132 dritte 132a bis 132d der Kontaktflächen. Außerdem bilden gemäß der Figur 8 die mit den Befestigungsbohrungen 139 und den Langlöchern 140 versehenen Schenkel der zweiten Seitenprofile 138 mit ihren nach innen und nach außen weisenden Flächen vierte 138a bis 138d der Kontaktflächen. Auch hier sind die genannten Flächen, die die dritten und vierten der Kontaktflächen bilden, metallisch blank gehalten, während die übrigen Flächen der aus Strom leitenden Material - insbesondere aus verzinktem Stahl oder Aluminium - gebildeten Seitenprofile 132 und 138 zusätzlich mit einer Farbschicht versehen sind.

Somit sind die Gehäuseteile 122 und 116 sowie 123 und 117 in Überlappungsbereichen metallisch blank und über Kontaktpaare, die entsprechend aus den Kontaktflächen 132a, 132b, 138a und 138b gebildet sind, elektrisch leitend verbunden.

Weiterhin sind aber auch die Gehäuseteile 116, 118; 116, 119; 117, 118; 117, 119 in ihrem Überlappungsbereich metallisch blank und über Kontaktpaaren, die entsprechend aus den Kontaktflächen 138c, 138d, 141a und 141b gebildet sind, elektrisch leitend verbunden.

Außerdem sind die Gehäuseteile 112 und 116 sowie 113 und 117 in Überlappungsbereichen metallisch blank und über Kontaktpaaren, die entsprechend aus den Kontaktflächen 132a, 132b, 138a und 138b gebildet sind, elektrisch leitend verbunden.

Durch die mit 150 bezeichneten Befestigungsmittel (hier Verschraubungen) werden die einander zugeordneten der blanken Kontaktflächen 130a, 130b, 132a bis 132d, 138a bis 138d und 141, 142 aufeinandergepresst und jeweils eine leitfähige, strombelastbare Verbindung hergestellt.

Die leitfähige Verbindung ist so ausgeführt, dass auch Kurzschlussströme im Fehlerfall "einpoliger Kurzschluss gegen Erde (PE)" von dem Schienengehäuse 105 geführt werden können. Hierzu sind die Kontaktflächen so groß ausgebildet, dass selbst bei maximaler Länge des Schienengehäuses 105 die Kontaktflächen jedes der durch die elektrische Verbindung der einzelnen Gehäuseteile entstandenen Gehäuseteil-Paare in Summe jeweils eine Überlappung von mindestens 450mm² pro kA Kurzschlussstrom bilden. Somit ist das Schienengehäuse 105 als PE-Leiter verwendbar.

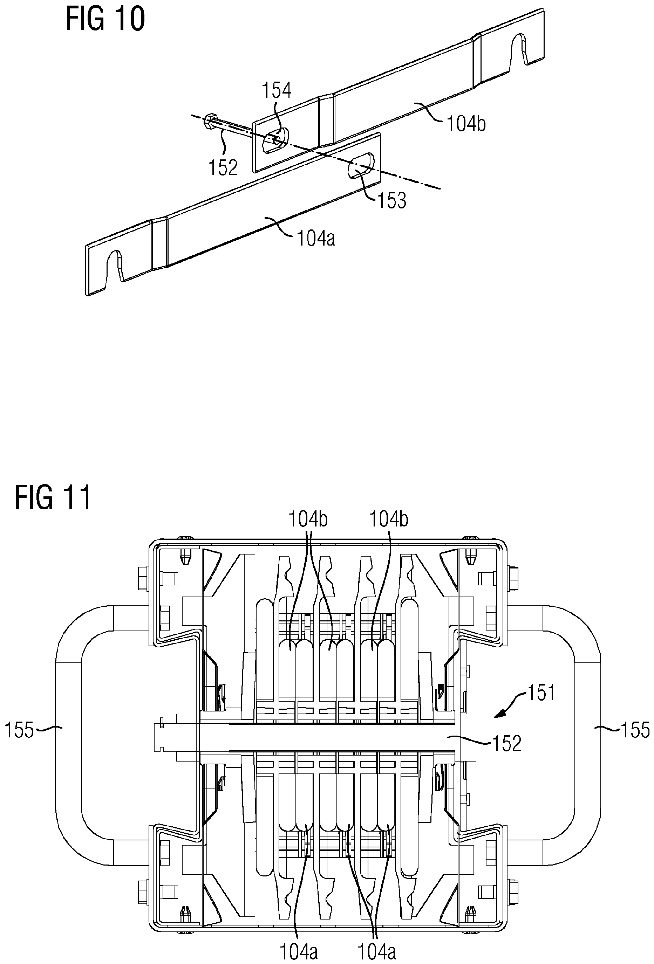

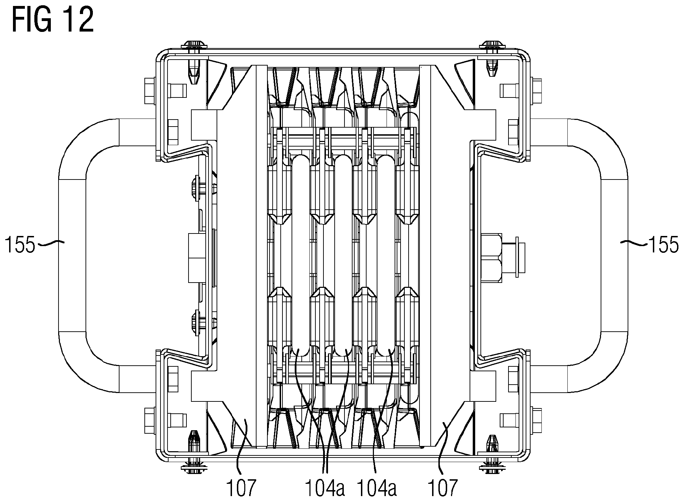

Gemäß der Figur 10 ist das Teilstück 104b der Stromschienen an seinem dem Teilstück 104a zugewandten Ende gekröpft und die beiden Teilstücke sind an ihren einander zugewandten Stirnseiten zur Strom leitenden Verbindung überlappend angeordnet.

Gemäß der Figur 11 sind jeweils zwei der Stütz- und Haltevorrichtungen 107, die die ersten Teilstücke 104a der Stromschienen tragen, an den W-förmig gebogenen ersten Seitenprofilen 132 des ersten Teilmantels 105a abgestützt. Jeweils zwei weitere der Stütz- und Haltevorrichtungen 107, die die zweiten Teilstücke der Stromschienen tragen, sind an den W-förmig gebogenen ersten Seitenprofilen 132 des zweiten Teilmantels 105b abgestützt. Auf diese Weise ist das erste 104a der beiden Teilstücke jeder der Stromschienen in dem ersten 105a der beiden Teilmäntel des Schienenkastens und das zweite 104b der Teilsstücke jeder der Stromschienen in dem zweiten 105b der beiden Teilmäntel des Schienenkastens in der Längsrichtung 103 verschiebbar und quer zur Längsrichtung ortsfest gehalten.

Gemäß der Figur 11 ist zur gegenseitigen Fixierung der Teilstücke 104a und 104b ein zweites Befestigungsmittel 151 in Form einer aus der Druckschrift DE 42 25 837 C2 bekannten Einzelbolzenverbindungen vorgesehen, wobei ein Bolzen 152 dieser Einzelbolzenverbindung im Überlappungsbereich einander zugeordnete Langlöcher 153, 154 der Teilstücke 104a, 104b durchgreift. Mittels dieser Einzelbolzenverbindung sind gleichzeitig das Schienengehäuse 105 und das aus den Stromschienen 104 gebildete Leiterschienenpaket unverlierbar mechanisch miteinander verbunden.

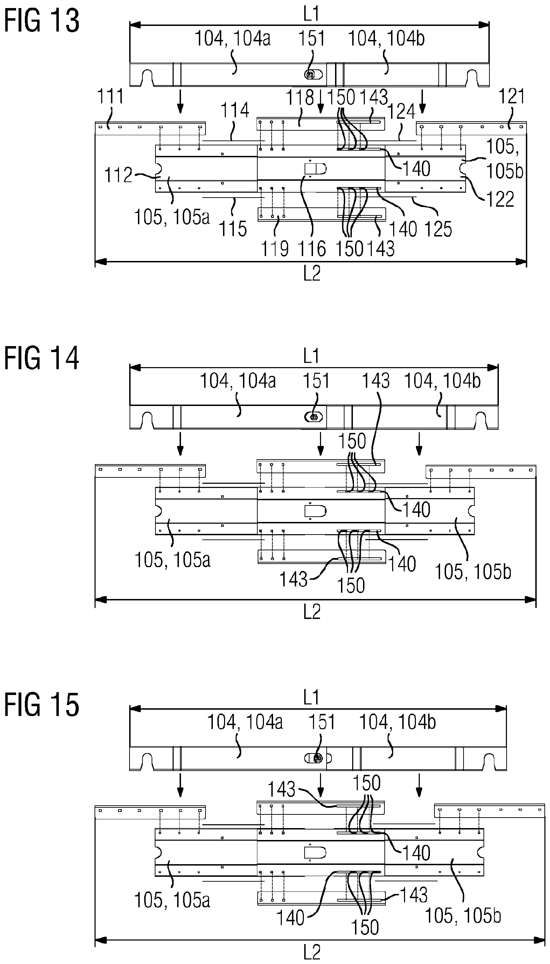

Gemäß der Figuren 13 bis 15 sind bei dem erfindungsgemäßen Schienenkasten die Länge L1 der aus den Teilstücken 104a und 104b gebildete Stromschienen 104 (die Länge L1 des Leiterschienenpaketes) und die Länge L2 des aus den Teilmänteln 105a und 105b gebildeten Schienengehäuses 105 über jeweils einen großen Längenbereich (von insbesondere jeweils bis zu 60mm) unabhängig voneinander frei (stufenlos) verstellbar. So zeigt die Figur 13 den Schienenkasten in einer ersten Endstellung, bei der sowohl die Länge L1 der Stromschienen 104 als auch die Länge L2 des Schienengehäuses 105 auf ihren kürzesten Wert eingestellt sind. Die Figur 14 zeigt eine mittlere Stellung, bei die Längen L1 und L2 auf Zwischenwerte eingestellt sind und die Figur 15 zeigt eine zweite Endstellung, bei der sowohl die Länge L1 der Stromschienen 104 als auch die Länge L2 des Schienengehäuses 105 auf ihren längsten Wert eingestellt sind.

Mit dem erfindungsgemäßen Schienenkasten 102 können bauseitig auftretende Toleranzen bei der Montage eines Schienestranges eines Schienenverteilersystems auf einfache, Zeit und Kosten sparende Weise ausgeglichen werden. Montage- und Fertigungstoleranzen sowie Projektierungsungenauigkeiten sind durch montagetechnisch einfache Installation des erfindungsgemäßen Schienenkasten vor Ort kompensierbar. Ein zeitaufwendiges Nachrüsten von Passtücken - wie es bisher in der Praxis erforderlich war - ist nicht mehr notwendig. Dabei werden die technischen Merkmale des Schienenverteilersystems bezüglich Stromtragfähigkeit, Kurzschlussfestigkeit, PE-Verbindung, IP-Schutzart oder die Bewegungsfreiheit des Leiterschienenpaketes gegenüber dem Schienengehäuse bei thermischer Längenausdehnung auf vorteilhafte Weise aufrecht erhalten. Wesentlich ist auch, dass die äußere Kontur des erfindungsgemäßen verstellbaren Schienenkastens 102 sehr der äußeren Kontur des übrigen Schienestranges ähnelt und sich damit optisch optimal in das Schienenverteilersystem integrieren lässt. Besondere Planungsvorschriften für die Auslegung des Schieneverteilersystems sind dabei nicht zu beachten.

Zur leichteren Montage des Schienenkastens 102 in dem Schienenstrang des Schieneverteilersystems 101 und zum Einstellen der Länge des Schienengehäuses 105 sind die beiden Teilmäntel 105a und 105b jeweils mit zwei Handgriffen 155 versehen.

## Patentansprüche

1. Schienenkasten (102) für ein Schienenverteilersystem (101) mit in einer Längsrichtung (103) langgestreckten Stromschienen (104), die ummantelt von einem Schienengehäuse (105), flach nebeneinander in dem Schienengehäuse (105) angeordneten sind,
bei dem jede der Stromschienen (104) aus zwei separaten, als starre Profile ausgebildeten Teilstücken (104a, 104b) besteht, die in der Längsrichtung (103) in Reihe Strom leitend miteinander verbunden sind, wobei die Teilstücke (104a, 104b) in dem Schienengehäuse (105) in der Längsrichtung (103) unabhängig voneinander verschiebbar und quer zur Längsrichtung ortsfest gehalten sind, und
bei dem das Schienengehäuse (105) aus zwei Teilmänteln (105a, 105b) besteht, die zur Längenänderung des Schienengehäuses (105) teleskopartig ineinander schiebbar sind, wobei eine Länge (L1) der aus den Teilstücken (104a, 104b) gebildeten Stromschienen (104) und eine Länge (L2) des aus den Teilmänteln (105a, 105b) gebildeten Schienengehäuses (105) unabhängig voneinander frei verstellbar sind,
**dadurch gekennzeichnet, dass**
die beiden Teilmäntel (105a, 105b) jeweils aus einem Strom leitenden Material bestehen und zu ihrer elektrisch leitenden Verbindung einander zugeordnete elektrische Kontaktflächen (132a, 138a; 132b, 138b) bilden, die unter Kontaktkraft elektrisch leitend unmittelbar aneinander gehalten sind, um einen als PE-Leiter verwendbaren Strompfad zu bilden.

2. Schienenkasten (102) nach Anspruch 1,
**dadurch gekennzeichnet,**
**dass** ein erstes (104a) der beiden Teilstücke jeder der Stromschienen in einem ersten (105a) der beiden Teilmäntel des Schienenkastens und das zweite der Teilstücke (104b) jeder der Stromschienen in dem zweiten (105b) der beiden Teilmäntel des Schienenkastens in der Längsrichtung (103) verschiebbar und quer zur Längsrichtung ortsfest gehalten sind und
**dass** zum Einen die beiden Teilstücke (104a, 104b) und zum Anderen die beiden Teilmäntel (105a, 105b) jeweils unverlierbar miteinander verbunden sind.

3. Schienenkasten (102) nach einem der Ansprüche 1 oder 2,
**dadurch gekennzeichnet, dass**
zur gegenseitigen Fixierung der beiden Teilmäntel (105a, 105b) des Schienengehäuses erste Befestigungsmittel (150) vorgesehen sind, die Langlöcher (140, 143) des ersten (105a) der beiden Teilmäntel und zugeordnete Befestigungsbohrungen (134) des zweiten (105b) der beiden Teilmäntel durchgreifen.

4. Schienenkasten (102) nach einem der Ansprüche 1 bis 3,
**dadurch gekennzeichnet, dass**
sich die Teilstücke (104a, 104b) zur Strom leitenden Verbindung an ihren einander zugewandten Stirnseiten überlappen.

5. Schienenkasten (102) nach einem der Ansprüche 1 bis 4,
**dadurch gekennzeichnet, dass**
zur gegenseitigen Fixierung der Teilstücke (104a, 104b) ein zweites Befestigungsmittel (151) vorgesehen ist, das im Überlappungsbereich einander zugeordnete Langlöcher (153, 154) der Teilstücke (104a, 104b) durchgreift.

6. Schienenkasten (102) nach einem der Ansprüche 1 bis 5,
**dadurch gekennzeichnet,**
die beiden Teilmäntel (105a, 105b) jeweils mit Handgriffen (155) versehen sind.

7. Schienenverteilersystem (101) mit Schienenkästen, die zur Bildung eines Schienenstranges stirnseitig aneinander gekoppelt sind,
**dadurch gekennzeichnet, dass**
zumindest einer (102) der Schienenkästen nach einem der Ansprüche 1 bis 6 ausgebildet ist.

## Claims

1. Busbar trunking unit (102) for a busbar trunking system (101) comprising busbars (104) which are elongated in a longitudinal direction (103), are encased by a busbar housing (105), and are arranged flat next to one another in the busbar housing (105),
wherein each of the busbars (104) consists of two separate sections (104a, 104b) embodied as rigid profiled elements and connected to one another in series in an electrically conductive manner in the longitudinal direction (103), wherein the sections (104a, 104b) can be displaced independently of one another in the busbar housing (105) in the longitudinal direction (103) and are held fixedly in place transversely to the longitudinal direction, and wherein the busbar housing (105) consists of two partial sheaths (105a, 105b) which are slidable into one another in a telescope-like manner in order to change the length of the busbar housing (105), wherein a length (L1) of the busbars (104) formed from the sections (104a, 104b) and a length (L2) of the busbar housing (105) formed from the partial sheaths (105a, 105b) are freely adjustable independently of one another
**characterised in that**
the two partial sheaths (105a, 105b) are each made of a current-conducting material and, in order to establish their electrically conductive connection, form mutually associated electrical contact surfaces (132a, 138a; 132b, 138b) which are held under contact force directly against one another in an electrically conductive manner, in order to form a current path which can be used as a PE conductor.

2. Busbar trunking unit (102) according to claim 1,
**characterised in that**
a first (104a) of the two sections of each of the busbars can be displaced in the longitudinal direction (103) and is held fixedly in place transversely to the longitudinal direction in a first (105a) of the two partial sheaths of the busbar trunking unit and the second of the sections (104b) of each of the busbars can be displaced in the longitudinal direction (103) and is held fixedly in place transversely to the longitudinal direction in the second (105b) of the two partial sheaths of the busbar trunking unit, and
**in that** the two sections (104a, 104b) on the one hand and the two partial sheaths (105a, 105b) on the other hand are captively connected to one another in each case.

3. Busbar trunking unit (102) according to one of claims 1 or 2,
**characterised in that**
first fixing means (150) are provided for mutual fixing of the two partial sheaths (105a, 105b) of the busbar housing, which fixing means (150) engage through slotted holes (140, 143) of the first (105a) of the two partial sheaths and associated fixing holes (134) of the second (105b) of the two partial sheaths.

4. Busbar trunking unit (102) according to one of claims 1 to 3,
**characterised in that**
in order to establish a current-conducting connection the sections (104a, 104b) overlap at their front faces facing toward one another.

5. Busbar trunking unit (102) according to one of claims 1 to 4,
**characterised in that**
a second fixing means (151) is provided for mutual fixing of the sections (104a, 104b), which fixing means (151) engages through mutually associated slotted holes (153, 154) of the sections (104a, 104b) in the overlap zone.

6. Busbar trunking unit (102) according to one of claims 1 to 5,
**characterised in that**
the two partial sheaths (105a, 105b) are each provided with handles (155).

7. Busbar trunking system (101) comprising busbar trunking units which are coupled to one another by their front face in order to form a busbar daisychain
**characterised in that**
at least one (102) of the busbar trunking units is embodied according to one of claims 1 to 6.

## Revendications

1. Coffret (102) de rails pour un système (101) de répartition de rails, comprenant des rails (104) de contact, qui s'étendent en longueur dans une direction (103) longitudinale et qui sont disposés, en étant enveloppés d'une enveloppe (105) de rails, à plat les uns à côté des autres dans l'enveloppe (105) de rails,
dans lequel chacun des rails (104) de contact est constitué de deux sous-pièces (104a, 104b) distinctes, qui sont constituées sous la forme de profilé rigide et qui sont reliées l'une à l'autre d'une manière conductrice de l'électricité en série dans la direction (103) longitudinale, les sous-pièces (104a, 104b) pouvant coulisser indépendamment l'une de l'autre dans la direction (103) longitudinal dans l'enveloppe (105) de rails et étant maintenues fixes en position transversalement à la direction longitudinale et dans lequel l'enveloppe (105) de rails est constituée de deux sous-enveloppes (105a, 105b), qui peuvent coulisser l'une dans l'autre télescopiquement pour la modification en longueur de l'enveloppe (105) de rails, une longueur (L1) des rails (104) de contact formée des sous-pièces (104a, 104b) et une longueur (L2) de l'enveloppe (105) de rails formée des sous-enveloppes (105a, 105b) étant réglables librement indépendamment l'une de l'autre,
**caractérisé en ce que**
les deux sous-enveloppes (105a, 105b) sont constituées chacune d'un matériau conducteur du courant et forment, pour leur liaison conductrice de l'électricité, des surfaces (132a, 138a ; 132b, 138b) de contact électrique associées l'une à l'autre, qui sont maintenues l'une contre l'autre directement de manière à conduire l'électricité sous une force de contact afin de former un trajet de courant pouvant être utilisé comme conducteur PE.

2. Coffret (102) de rails suivant la revendication 1,
**caractérisé en ce qu'**
une première (104a) des deux sous-pièces de chacun des rails de contact peut coulisser dans la direction (103) longitudinale et être maintenue fixe en position transversalement à la direction longitudinale dans une première (105a) des deux sous-enveloppes du coffret de rails, et la deuxième des sous-pièces (104a) de chacun des rails de contact peut coulisser et être maintenue fixe en position transversalement à la direction longitudinale dans la deuxième (105b) des deux sous-enveloppes du coffret de rails et
**en ce que** d'une part les deux sous-pièces (104a, 104b), et d'autre part les deux sous-enveloppes (105a, 105b) sont reliées entre elles d'une manière imperdable.

3. Coffret (102) de rails suivant l'une des revendications 1 ou 2,
**caractérisé en ce que**
pour l'immobilisation réciproque des deux sous-enveloppes (105a, 105b) de l'enveloppe de rails, il est prévu un premier moyen (150) de fixation, qui passe dans des boutonnières (140, 143) de la première (105a) des deux sous-enveloppes et dans des trous (134) de fixation associés de la deuxième (105b) des deux sous-enveloppes.

4. Coffret (102) de rails suivant l'une des revendications 1 ou 3,
**caractérisé en ce que**
les sous-pièces (104a, 104b) se chevauchent pour la liaison conductrice du courant sur leurs côtés frontaux tournés l'un vers l'autre.

5. Coffret (102) de rails suivant l'une des revendications 1 ou 4,
**caractérisé en ce que**
pour l'immobilisation réciproque des sous-pièces (104a, 104b), il est prévu un deuxième moyen (151) de fixation, qui, dans la région de chevauchement, passe dans des boutonnières (153, 154) associées l'une à l'autre des sous-pièces (104a, 104b).

6. Coffret (102) de rails suivant l'une des revendications 1 ou 5,
**caractérisé en ce que**
les deux sous-enveloppes(105a, 105b) sont pourvues chacune de poignées (155).

7. Système (101) répartiteur de rails, comprenant des coffrets de rails, qui sont accouplés l'un à l'autre du côté frontal pour former une file de rails,
**caractérisé en ce qu'**
au moins l'un (102) des coffrets de rails est constitué suivant l'une des revendications 1 à 6.
